# EUROPEAN PATENT APPLICATION

(11) **EP 2 282 442 A1**
(43) Date of publication of application: **09.02.2011**
(21) Application number: 09753483.8
(22) Date of filing: 26.05.2009
(51) Int. Cl.: H04L 9/08

(54) **KEY DISTRIBUTING METHOD, PUBLIC KEY OF KEY DISTRIBUTION CENTRE ONLINE UPDATING METHOD AND DEVICE**

(30) Priority: 29.05.2008 CN 200810018334
(71) Applicant: China Iwncomm Co., Ltd, Shaanxi 710075 (CN)
(72) Inventor: TIE, Manxia, Shaanxi 710075 (CN); CAO, Jun, Shaanxi 710075 (CN); LAI, Xiaolong, Shaanxi 710075 (CN); HUANG, Zhenhai, Shaanxi 710075 (CN)
(74) Representative: Palix, Stéphane
(86) International application number: PCT/CN2009/071976
(87) International publication number: WO 2009/143765

(57) **Abstract**

A key distributing method, a public key of key distribution centre online updating method, a key distribution centre, a communication entity and a key management system. The system includes: communication entities, a carrying device, a key distribution centre and a database, wherein the carrying device carries or transports the information during the key distributing course and the public key online updating course, the database stores whether each communication entity registered secret service; the database connects with the key distribution centre, the key distribution centre connects with the carrying device, and the carrying device connects with each communication entity. Using the cipher technology of public key, a key distribution system is provided based on principle of three-element peer authentication (TePA). The system safely distributes the communication key to each pair entities to enable keys have PFS attribute, reduces the key management complexity of the system, and realizes online updating of the public key of the trusted third party i.e. key distribution centre.

## Description

This application claims the priority to Chinese patent application No. 200810018334.6, filed with the State Intellectual Property Office on May 29, 2008 and titled "Key distribution method using public-key cryptography and system thereof", which is hereby incorporated by reference in its entirety.

### Field of the Invention

The present invention relates to the field of data security, and in particular to a key distribution method, a method for online updating a public key of a key distribution center, a key distribution center, a communication entity and a key management system using public-key cryptography.

### Background of the Invention

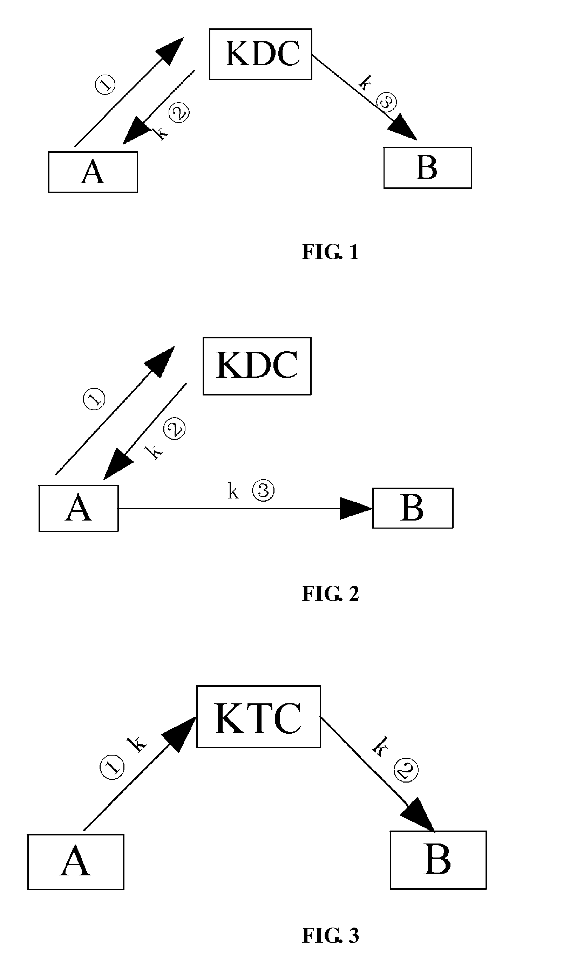

Key management is a key technique for secure communication between communication entities. For small networks, a key may be shared by each pair of users. However, this is not practicable in large networks. To realize secure communication between any two of the users in a system with N users, *N(N-1)*/*2* keys have to be generated and distributed. As the system becomes more complex and scales up to, e.g., a network with N being 1000, approximately 500,000 keys have to be distributed, stored, etc. Normally, in order to lower the complexity, centralized key management is used, which includes a trusted online server acting as a Key Distribution Center (KDC) or a Key Transportation Center (KTC). FIG. 1 to FIG. 4 shows some of the basic modes, with k being a session key between a first communication entity A and a second communication entity B.

As shown in FIG. 1, in step ①, the first communication entity A requests the key distribution center to distribute a key for communication with the second communication entity B; then the key distribution center generates k and sends k to the first communication entity A and the second communication entity B, respectively (steps ② and ③). The sending processes are encrypted using pre-shared keys between the key distribution center and A, and between the key distribution center and B, respectively.

As shown in FIG. 2, in step ①, the first communication entity A requests the key distribution center to distribute a key for communication with the second communication entity B; then the key distribution center generates k and sends k to the first communication entity A (step ②), and the first entity A transports k to the second communication entity B (step ③). The sending and transporting processes are encrypted using pre-shared keys between the key distribution center and A, and between the key distribution center and B, respectively.

As shown in FIG. 3, in step ①, the first communication entity A sends a key k for communication with the second communication entity B to the key transportation center, and the key transportation center sends k to the second communication entity B (step ②). The sending processes are encrypted using pre-shared keys between the key transportation center and A, and between the key transportation center and B, respectively.

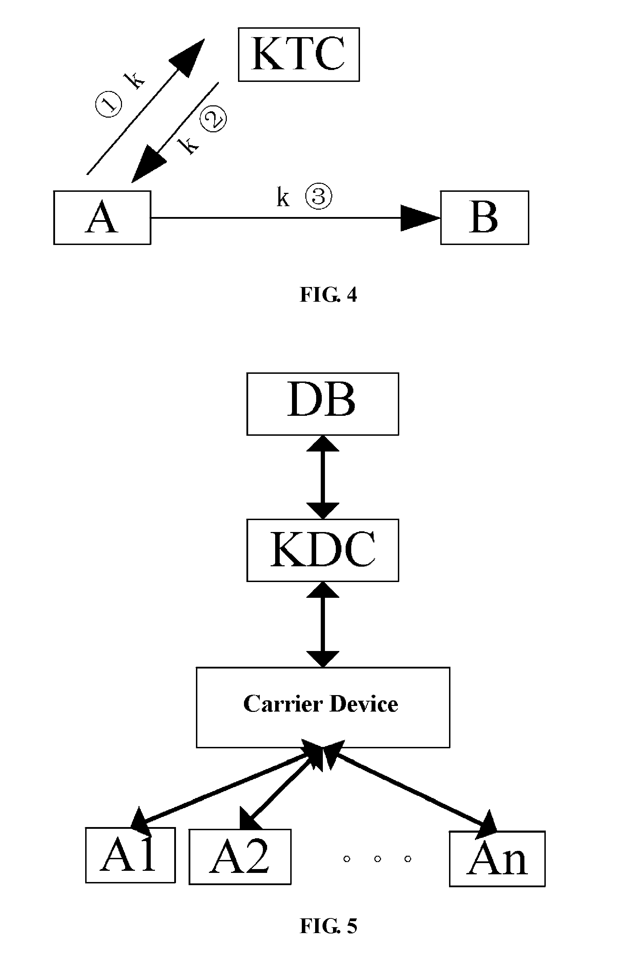

As shown in FIG. 4, in step ①, the first communication entity A sends a key k for communication with the second communication entity B to the key transportation center, the key transportation center sends to the first entity A a notification of transporting k to the second communication entity B (step ②), and the first entity A transports k to the second entity B upon reception of the notification (step ③). The sending and transporting processes are encrypted using pre-shared keys between the key transportation center and A, and between the key transportation center and B, respectively.

As the key distribution center or the key transportation center is involved, each pair of entities can use a new communication key each time. However, each user has to keep a secret management key for long-term use shared with the key distribution center or the key transportation center. Moreover, a huge number of secret management keys are stored at the key distribution center and the key transportation center, posing a serious risk to safety because anything wrong with the key distribution center or the key transportation center would cause direct threats to the whole system. In addition, none of these key distribution methods above provides Perfect Forward Secrecy (PFS).

### Summary of the Invention

In order to solve the technical problems in the prior art discussed above, based on the Tri-element Peer Authentication (TePA) and using public-key cryptography, the invention proposes a key distribution method, a method for online updating a public key of a key distribution center, a key distribution center, a communication entity and a key management system. The key management system secures distribution of communication keys for entity pairs, provides keys with the PFS property, reduces key management complexity, and enables online updating of public keys of the key distribution center.

Technical solutions of the invention are described hereinafter.

A key distribution method, in which a key distribution center has a public-private key pair, and the method includes:
receiving, by the key distribution center, a key request message forwarded via a carrier device from a first communication entity, the key request message including a temporary public key of a first communication entity;
searching, by the key distribution center, a database for whether the first communication entity and a second communication entity both have registered a security service, and generating a session key for communication between the first communication entity and the second communication entity if they both have registered the security service;
encrypting, by the key distribution center, the session key using the temporary public key of the first communication entity, and calculating a signature using the private key of the key distribution center, to form a key response message;
returning, by the key distribution center, the key response message to the first communication entity via the carrier device;
receiving, by the key distribution center, a key request message forwarded via the carrier device from the second communication entity, the key request message including a temporary public key of the second communication entity;
encrypting, by the key distribution center, the session key for communication between the second communication entity and the first communication entity using the temporary public key of the second communication entity, and calculating a signature using the private key of the key distribution center, to form a key response message; and
returning, by the key distribution center, the key response message formed using the temporary public key of the second communication entity to the second communication entity via the carrier device.

The invention also provides a key distribution method, in which communication entities obtain a public key of a key distribution center before secure communication, and the method includes:
generating, by a first communication entity and a second communication entity, their respective temporary public-private key pairs;
sending, by each of the first communication entity and the second communication entity, a key request message using its generated temporary public key to the key distribution center via a carrier device, the key request message including the temporary public key of the corresponding communication entity;
receiving, a key response message sent from the key distribution center, the key response message including a session key for communication between the first communication entity and the second communication entity; and
performing, by each of the first communication entity and the second communication entity, signature verification on the key response message using the public key of the key distribution center, and decrypting the key response message using its temporary private key if the verification is passed, to obtain the session key.

The method may further include:
removing, by the first communication entity and the second communication entity, their respective temporary public-private key pairs after communication using the session key, and when secure communication is to be started next time, or when the session key is to be updated during secure communication, regenerating their respective temporary public-private key pairs, sending key request messages to the key distribution center via the carrier device, and repeating the steps above, to obtain a new session key.

The key request message and the key response message may include a security parameter for negotiation and advertisement of an encryption algorithm, an operating mode, an operating parameter, etc.

The key request message forwarded via the carrier device from the first communication entity may further include information about the second communication entity; and
the key request message forwarded via the carrier device from the second communication entity may further include information about the first communication entity.

The invention also provides a method for online updating a public key of a key distribution center, including:
searching, by the key distribution center, a database to obtain a list of communication entities that have registered a security service;
generating, by the key distribution center, a public-key update notification message, the public-key update notification message including a new public key of the key distribution center and a signature calculated using an old private key of the key distribution center; and
sending, by the key distribution center, the public-key update notification message to a communication entity that has registered the security service according to the list of communication entities that have registered the security service via a carrier device.

The method may further include:
verifying, by the communication entity, the signature in the public-key update notification message sent via the carrier device from the key distribution center using a locally-stored public key of the key distribution center upon reception of the public-key update notification message, and updating the locally-stored public key of the key distribution center with the new public key in the public-key update notification message if the verification is passed.

The method may further include:
sending, by the communication entity, a public-key update confirmation message to the key distribution center via the carrier device after finishing updating the locally-stored public key of the key distribution center; and
receiving, by the key distribution center, the public-key update confirmation message via the carrier device that is sent from the communication entity, the public-key update confirmation message including information on the communication entity having finished updating the public key of the key distribution center.

Correspondingly, the invention also provides a key distribution center, the key distribution center having a public-private key pair and including:
a first reception unit, adapted to receive a key request message forwarded via a carrier device from the first communication entity, the key request message including a temporary public key of a first communication entity and information about a second communication entity that the first communication entity is to communicate with, and receive a second key request message forwarded via the carrier device from the second communication entity, the second key request message including a temporary public key of the second communication entity and information about the first communication entity that the second communication entity is to communicate with;
a querying unit, adapted to search a database for whether the first communication entity and the second communication entity both have registered a security service, and send a query result;
a first generation unit, adapted to generate a session key for communication between the first communication entity and the second communication entity upon reception of the query result sent by the querying unit that the first communication entity and the second communication entity both have registered the security service;
an encryption unit, adapted to encrypt the session key generated by the generation unit using the temporary public key of the first communication entity and calculate a signature using the private key of the key distribution center, to form a key response message, and, encrypt the session key for communication between the second communication entity and the first communication entity using the temporary public key of the second communication entity and calculate a signature using the private key of the key distribution center, to form a key response message; and
a first sending unit, adapted to return the key response message formed by the encryption unit using the temporary public key of the first communication entity to the first communication entity via the carrier device, and return the key response message formed using the temporary public key of the second communication entity to the second communication entity via the carrier device.

The key distribution center may further include:
an obtaining unit, adapted to search the database to obtain a list of communication entities that have registered the security service;
a second generation unit, adapted to generate a public-key update notification message, the public-key update notification message including a new public key of the key distribution center and a signature calculated using an old private key of the key distribution center; and
a second sending unit, adapted to send the public-key update notification message to a communication entity that has registered the security service via the carrier device according to the list obtained by the obtaining unit of communication entities that have registered the security service.

The key distribution center may further include:
a second reception unit, adapted to receive a public-key update confirmation message sent via the carrier device from the communication entity, the public-key update confirmation message including information on the communication entity having finished updating the public key of the key distribution center.

Correspondingly, the invention also provides a communication entity adapted to obtain a public key of a key distribution center before secure communication, and the communication entity including:
a generation unit, adapted to generate a temporary public-private key pair;
a sending unit, adapted to send a key request message using the generated temporary public key to a key distribution center via a carrier device, the key request message including the temporary public key of the communication entity and information about a corresponding communication entity that the communication entity is to communicate with;
a reception unit, adapted to receive a key response message sent from the key distribution center, the key response message including a session key for communication between the communication entity and the corresponding communication entity that the communication entity is to communicate with; and
a verification unit, adapted to perform signature verification on the key response message using the public key of the key distribution center, and decrypt the key response message using the temporary private key of the communication entity if the verification is passed, to obtain the session key.

The communication entity may further include:
a key removal unit, adapted to remove the temporary public-private key pair after communication using the session key, and send to the generation unit a notification of regenerating a temporary public-private key pair when secure communication is to be started next time, or when the session key is to be updated during secure communication.

The communication entity may further include:
a key updating unit, adapted to verify a signature in a public-key update notification message sent via the carrier device from the key distribution center using a locally-stored public key of the key distribution center upon reception of the public-key update notification message, and, update the locally-stored public key of the key distribution center with a new public key in the public-key update notification message if the verification is passed.

The communication entity may further include:
a key update confirmation unit, adapted to send a public-key update confirmation message to the key distribution center via the carrier device after the key updating unit finishes updating the locally-stored public key of the key distribution center, the public-key update confirmation message including information on the communication entity having finished updated the public key of the key distribution center.

The invention also provides a key management system, the key management system including a communication entity, a carrier device, a key distribution center and a database, in which:
the carrier device is adapted to transport a key request message, a key response message, a public-key update notification or a public-key update confirmation message during key distribution process and public-key update processes;
the database is adapted to store whether the communication entity has registered a security service and support the key distribution center; or, to return a list of communication entities that have registered the security service to the key distribution center;
the key distribution center is connected with the carrier device and the database, and is adapted to determine whether to generate a session key according to a result from searching the database upon reception of the key request message forwarded via the carrier device, encrypt and sign the generated session key to form a key response message, and send the key response message to the communication entity via the carrier device; or, to search the database to obtain the list of communication entities that have registered the security service, send the generated public-key update notification message to the communication entity via the carrier device, and receive the public-key update confirmation message via the carrier device that is sent from the communication entity; and
the communication entity is adapted to generate a temporary public-private key pair, send the key request message to the key distribution center via the carrier device, and perform signature verification on and decrypt the received key response message using a public key of the key distribution center and the temporary private key of the communication entity to obtain the session key; or, to update a stored public key upon reception of the public key update notification message via the carrier device that is sent from the key distribution center, and send the public-key update confirmation message to the key distribution center via the carrier device after finishing updating the stored public key.

The key management system may include two or more of the communication entities.

The carrier device may be a short messaging system, a Global System for Mobile communications system, a Code Division Multiple Access system, a Public Switched Telephone Network or the Internet.

Based on the Tri-element Peer Authentication (TePA) and using public-key cryptography, the invention distributes keys to entities for communication through a Key Distribution Center (KDC), thereby realizing secure distribution and dynamic updating of the communication keys, and providing Perfect Forward Secrecy (PFS), hence solving the problems in the prior art including: the KDC has to manage a huge number of keys, users have to store long-term secret keys, and the communication keys do not have PFS. Moreover, the invention supports online updating of public keys of the KDC. The invention is applicable in mobile communication network systems and other communication systems.

### Brief Description of the Drawings

FIG. 1 to FIG. 4 illustrate a conventional key distribution method based on a key distribution center or a key transportation center;

FIG. 5 illustrates a key distribution system using public-key cryptography according to the invention;

FIG. 6 illustrates a key distribution system using public-key cryptography according to the invention; and

FIG. 7 illustrates a method using public-key cryptography for online updating a public key of a key distribution center according to the invention.

### Detailed Description of the Invention

As shown in FIG. 5, which illustrates a key distribution system using public-key cryptography according to the invention, the key distribution system includes: communication entities A1, A2, ..., An; a carrier device; a Key Distribution Center (KDC); and a database (DB). The carrier device is adapted to carry or transport messages in key distribution process and public-key updating process. It may be a short messaging system, a GSM (Global System for Mobile communications) system, a CDMA (Code Division Multiple Access) system, a PSTN (Public Switched Telephone Network), the Internet, etc. The database (DB) stores whether communication entities have registered the security service, and a communication entity Ai (i=1, 2, ..., n) may have or have not registered the security service.

An embodiment of the invention further provides a key distribution method, in which a key distribution center has a public-private key pair, and the method includes:

1) The key distribution center receives a key request message forwarded via a carrier device from the first communication entity, the key request message including a temporary public key of a first communication entity. The key distribution center searches a database for whether the first communication entity and a second communication entity both have registered the security service; and if they both have registered the security service, generates a session key for communication between the first communication entity and the second communication entity.

2) The key distribution center encrypts the session key for communication between the second communication entity and the first communication entity using the temporary public key of the first communication entity, and calculates its signature using the private key of the key distribution center, to form a key response message.

3) The key distribution center returns the key response message to the first communication entity via the carrier device.

4) The key distribution center receives a key request message forwarded via the carrier device from the second communication entity, the key request message including a temporary public key of the second communication entity.

5) The key distribution center encrypts the session key for communication between the second communication entity and the first communication entity using the temporary public key of the second communication entity, and calculates its signature using the private key of the key distribution center, to form a key response message.

6) The key distribution center returns the key response message formed using the temporary public key of the second communication entity to the second communication entity via the carrier device.

Correspondingly, the invention also provides a key distribution method, in which communication entities obtain a public key of a key distribution center before secure communication, and the method includes:

1) A first communication entity and a second communication entity generate their respective temporary public-private key pairs;

2) Each of the first communication entity and the second communication entity sends a key request message using its generated temporary public key to the key distribution center via a carrier device, the key request message including the temporary public key of the corresponding communication entity;

3) A key response message sent from the key distribution center is received, the key response message including a session key for communication between the first communication entity and the second communication entity; and

4) Each of the first communication entity and the second communication entity performs signature verification on the key response message using the public key of the key distribution center, and if the verification is passed, decrypts the key response message using its temporary private key, to obtain the session key.

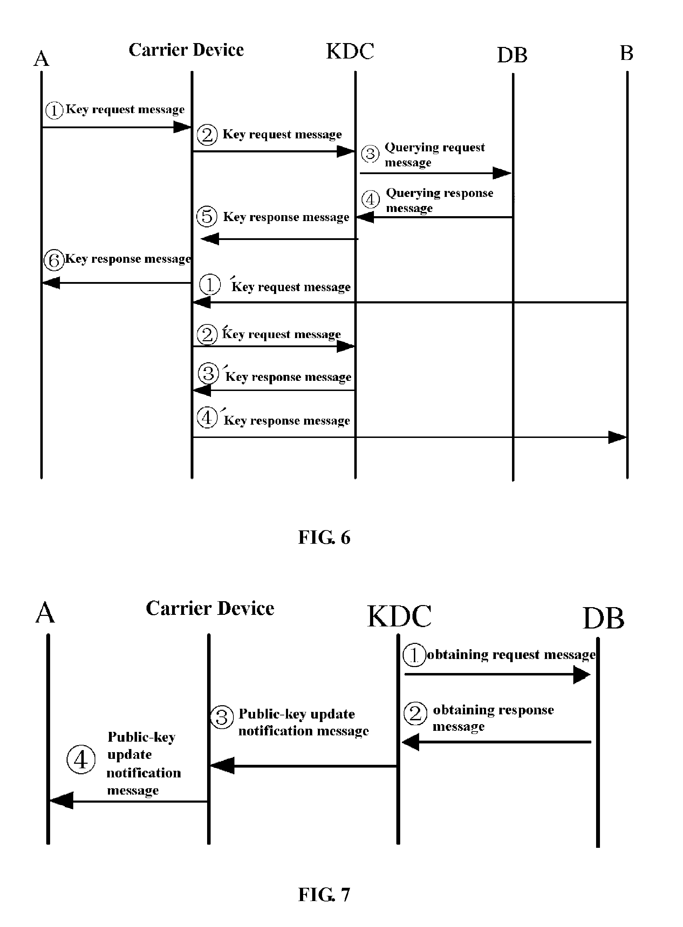

A particular implementation of the key distribution method is described below in connection with the system above. As shown in FIG. 6, a flow chart of a key distribution method using public-key cryptography according to the invention, the method includes the following steps:

The key distribution center has a public-private key pair: x and Px. Before communication, the communication entities (e.g., a communication entity A and a communication entity B) obtain in advance the public key Px of the key distribution center, and store Px locally. For secure communication between the first communication entity A and the second communication entity B, they obtain a session key by the key distribution method.

1) The first communication entity A generates a temporary public-private key pair a and Pa, and sends a key request message to the key distribution center via a carrier device (steps ① and ②), the key request message including the temporary public key Pa of the first communication entity A.

2) Upon reception of the key request message of the first communication entity A transported via the carrier device, the key distribution center searches a database for whether the first communication entity A and the second communication entity B both have registered the security service. That is, upon reception of the key request message, the key distribution center sends to the database a request querying whether the first communication entity A and the second communication entity B both have registered the security service, and receives a query result returned by the database (steps ③ nd ④). If the query result received by the key distribution center receives shows that the first communication entity A and the second communication entity B both have registered the security service, then the key distribution center generates a session key k for communication between the first communication entity A and the second communication entity B, encrypts the session key k using the temporary public key Pa of the first communication entity A, and calculates its signature using the private key x of the key distribution center, to form a key response message, and returns it to the first communication entity A via the carrier device (steps ⑤ and ⑥). If the query result received by the key distribution center receives shows that the first communication entity A and the second communication entity B both have not registered the security service or only one of them has registered the security service, then the key distribution center returns an error message to the first communication entity via the carrier device (not shown).

3) Upon reception of the key response message transported via the carrier device, the first communication entity A performs signature verification using the locally-stored public key Px of the key distribution center; and if the verification is passed, the first communication entity A performs decryption using the temporary private key a of the first communication entity A, to obtain the session key k. If the first communication entity A receives an error message sent from the key distribution center and transported via the carrier device, the secure communication fails.

4) Correspondingly, the second communication entity B generates a temporary public-private key pair b and Pb, and sends a key request message to the key distribution center via the carrier device, the key request message including the temporary public key Pb of the second communication entity B. That is, the second communication entity B sends a key request message to the carrier device, the key request message including the temporary public key Pb of the second communication entity B; and the carrier device forwards the received key request message to the key distribution center (steps ①' and ②' in FIG. 6).

5) Upon reception of the key request message of the second communication entity B forwarded via the carrier device, the key distribution center encrypts the session key k for communication between the first communication entity A and the second communication entity B using the temporary public key Pb of the second communication entity B, calculates its signature using the private key x of the key distribution center, to form a key response message, and returns it to the second communication entity B via the carrier device. That is, the key distribution center sends the formed key response message to the carrier device, and the carrier device forwards the received key response message to the second communication entity B (steps ③' and ④' in FIG. 6).

6) Upon reception of the key response message transported via the carrier device, the second communication entity B performs signature verification using the locally-stored public key Px of the key distribution center; and if the verification is passed, the second communication entity B performs decryption using the private key b of the second communication entity B, to obtain the session key k.

7) Then, the first communication entity A and the second communication entity B perform secure communication using k as a session key.

In this embodiment, the first communication entity A and the second communication entity B do not need to store their respective temporary public-private key pairs, and can remove them duly. For secure communication next time, or, for updating the session key during secure communication, they can regenerate temporary public-private key pairs, send key request messages to the key distribution center, and repeat the steps above, to obtain a new session key.

Particularly, the key request message and the key response message can carry a security parameter for negotiation and advertisement of an encryption algorithm, an operating mode, an operating parameter, etc.

The key request message sent from the first communication entity A or the second communication entity B to the key distribution center can also carry information about the other party.

The key distribution method using public-key cryptography according to the invention can be generalized to distribution of a session key for secure communication between three or more entities, the implementation of which is similar to the communication between two entities. Therefore detailed descriptions are omitted here.

For security concerns, or, to meet a requirement of a communication service, the public-private key pair of the key distribution center needs to be updated periodically or dynamically, to a new public-private key pair that can be denoted as x' and Px'. A method for notifying the communication entities of the new public key Px' online is described hereinafter.

Based on the embodiments above, the invention further provides a method for online updating a public key of a key distribution center. As a particular implementation shown in FIG. 7, a process of online updating a public key of a key distribution center includes:

1) The key distribution center searches a database and obtains a list of communication entities that have registered the security service. That is, the key distribution center sends to the database a request for a list of communication entities that have registered the security service, and receives a response returned by the database including the list of communication entities that have registered the security service (steps and ).

2) The key distribution center generates a public-key update notification message, the message including the new public key Px' of the key distribution center and a signature calculated using an old private key x of the key distribution center.

3) According to the list of communication entities that have registered the security service, the key distribution center sends the public-key update notification message to a communication entity that has registered the security service via a carrier device. That is, the key distribution center sends the generated public-key update notification message to a communication entity that has registered the security service via a carrier device according to the list of communication entities that have registered the security service (steps ③ and ④).

4) Upon reception of the public-key update notification message, the communication entity verifies the signature therein using a locally-stored public key Px of the key distribution center; and if the verification is passed, the communication entity updates the locally-stored public key with the new public key Px', otherwise, the message is discarded.

In some application scenarios, the key distribution center needs to know whether the communication entity has obtained the new public key Px'. Then, after receiving the public-key update notification message and successful verification, the communication entity sends a public-key update confirmation message to the key distribution center via the carrier device, to report that the communication entity has finished updating the public key of the key distribution center.

Based on the implementation of the method above, the invention provides a key distribution center. The key distribution center has a public-private key pair and includes: a first reception unit, a querying unit, a first generation unit, an encryption unit and a first sending unit. The first reception unit is adapted to receive a key request message forwarded via a carrier device from the first communication entity, the key request message including a temporary public key of a first communication entity and information about a second communication entity that the first communication entity is to communicate with, and receive a second key request message forwarded via the carrier device from the second communication entity, the second key request message including a temporary public key of the second communication entity and information about the first communication entity that the second communication entity is to communicate with. The querying unit is adapted to search a database for whether the first communication entity and the second communication entity both have registered a security service, and send a query result. The first generation unit is adapted to generate a session key for communication between the first communication entity and the second communication entity upon reception of the query result sent by the querying unit that the first communication entity and the second communication entity both have registered the security service. The encryption unit is adapted to encrypt the session key generated by the generation unit using the temporary public key of the first communication entity and calculate a signature using the private key of the key distribution center, to form a key response message, and, encrypt the session key for communication between the second communication entity and the first communication entity using the temporary public key of the second communication entity and calculate a signature using the private key of the key distribution center, to form a key response message. The first sending unit is adapted to return the key response message formed by the encryption unit using the temporary public key of the first communication entity to the first communication entity via the carrier device, and return the key response message formed using the temporary public key of the second communication entity to the second communication entity via the carrier device.

The key distribution center may further include: an obtaining unit, a second generation unit and a second sending unit. The obtaining unit is adapted to search the database to obtain a list of communication entities that have registered the security service. The second generation unit is adapted to generate a public-key update notification message, the public-key update notification message including a new public key of the key distribution center and a signature calculated using an old private key of the key distribution center. The second sending unit is adapted to send the public-key update notification message to a communication entity that has registered the security service via the carrier device according to the list obtained by the obtaining unit of communication entities that have registered the security service.

The key distribution center may further include: second reception unit, adapted to receive a public-key update confirmation message sent via the carrier device from the communication entity, the public-key update confirmation message including information on the communication entity having finished updating the public key of the key distribution center.

Correspondingly, the invention also provides a communication entity which is adapted to obtain a public key of a key distribution center before secure communication. The communication entity includes: a generation unit, a sending unit, a reception unit and a verification unit. The generation unit is adapted to generate a temporary public-private key pair. The sending unit is adapted to send a key request message using the generated temporary public key to a key distribution center via a carrier device, the key request message including the temporary public key of the communication entity and information about a corresponding communication entity that the communication entity is to communicate with. The reception unit is adapted to receive a key response message sent from the key distribution center, the key response message including a session key for communication between the communication entity and the corresponding communication entity that the communication entity is to communicate with. The verification unit is adapted to perform signature verification on the key response message using the public key of the key distribution center, and decrypt the key response message using the temporary private key of the communication entity if the verification is passed, to obtain the session key.

The communication entity may further include: a key removal unit, adapted to remove the temporary public-private key pair after communication using the session key, and send to the generation unit a notification of regenerating a temporary public-private key pair when secure communication is to be started next time, or when the session key is to be updated during secure communication.

The communication entity may further include: a key updating unit, adapted to verify a signature in a public-key update notification message sent via the carrier device from the key distribution center using a locally-stored public key of the key distribution center upon reception of the public-key update notification message, and, update the locally-stored public key of the key distribution center with a new public key in the public-key update notification message if the verification is passed.

The communication entity may further include: a key update confirmation unit, adapted to send a public-key update confirmation message to the key distribution center via the carrier device after the key updating unit finishes updating the locally-stored public key of the key distribution center, the public-key update confirmation message including information on the communication entity having finished updated the public key of the key distribution center.

Correspondingly, the invention also provides a key management system. The key management system includes a communication entity, a carrier device, a key distribution center and a database. The carrier device is adapted to transport a key request message, a key response message, a public-key update notification or a public-key update confirmation message during key distribution process and public-key update processes. The database is adapted to store whether the communication entity has registered a security service and support the key distribution center; or, to return a list of communication entities that have registered the security service to the key distribution center. The key distribution center is connected with the carrier device and the database, and is adapted to determine whether to generate a session key according to a result from searching the database upon reception of the key request message forwarded via the carrier device, encrypt and sign the generated session key to form a key response message, and send the key response message to the communication entity via the carrier device; or, to search the database to obtain the list of communication entities that have registered the security service, send the generated public-key update notification message to the communication entity via the carrier device, and receive the public-key update confirmation message via the carrier device that is sent from the communication entity. The communication entity is adapted to generate a temporary public-private key pair, send the key request message to the key distribution center via the carrier device, and perform signature verification on and decrypt the received key response message using a public key of the key distribution center and the temporary private key of the communication entity to obtain the session key; or, to update a stored public key upon reception of the public key update notification message via the carrier device that is sent from the key distribution center, and send the public-key update confirmation message to the key distribution center via the carrier device after finishing updating the stored public key.

The key management system may include two or more of the communication entities.

The carrier device may be a short messaging system, a Global System for Mobile communications system, a Code Division Multiple Access system, a Public Switched Telephone Network or the Internet.

For respective functions and roles of the devices and entities in the system, please refer to corresponding descriptions of the methods above.

In view of the foregoing embodiments, those skilled in the art shall know that the invention may be implemented with software provided with a necessary general-purpose hardware platform, and of course, the invention may also be implemented with hardware; however, in many cases, the former is preferred. Based on this understanding, the technical solution of the invention substantially or its contributive part may be implemented in the form of a software product. The software product may be stored in a storage medium, e.g., ROM/RAM, magnetic disk, optical disc, and may include instructions to cause a computer device (e.g., personal computer, server, or network device) to execute a method according to an embodiment or part of an embodiment of the invention.

Preferred embodiments of the invention are described above. It should be noted that those skilled in the art can make various modifications and variations without deviation from the scope of the invention. And those modifications and variation shall be included in the scope of the invention.

## Claims

1. A key distribution method, wherein a key distribution center has a public-private key pair, and the method comprises:
receiving, by the key distribution center, a key request message forwarded via a carrier device from a first communication entity, the key request message comprising a temporary public key of a first communication entity;
searching, by the key distribution center, a database for whether the first communication entity and a second communication entity both have registered a security service, and generating a session key for communication between the first communication entity and the second communication entity if they both have registered the security service;
encrypting, by the key distribution center, the session key using the temporary public key of the first communication entity, and calculating a signature using the private key of the key distribution center, to form a key response message;
returning, by the key distribution center, the key response message to the first communication entity via the carrier device;
receiving, by the key distribution center, a key request message forwarded via the carrier device from the second communication entity, the key request message comprising a temporary public key of the second communication entity;
encrypting, by the key distribution center, the session key for communication between the second communication entity and the first communication entity using the temporary public key of the second communication entity, and calculating a signature using the private key of the key distribution center, to form a key response message; and
returning, by the key distribution center, the key response message formed using the temporary public key of the second communication entity to the second communication entity via the carrier device.

2. A key distribution method, wherein communication entities obtain a public key of a key distribution center before secure communication, and the method comprises:
generating, by a first communication entity and a second communication entity, their respective temporary public-private key pairs;
sending, by each of the first communication entity and the second communication entity, a key request message using its generated temporary public key to the key distribution center via a carrier device, the key request message comprising the temporary public key of the corresponding communication entity;
receiving, a key response message sent from the key distribution center via the carrier device, the key response message comprising a session key for communication between the first communication entity and the second communication entity; and
performing, by each of the first communication entity and the second communication entity, signature verification on the key response message using the public key of the key distribution center, and decrypting the key response message using its temporary private key if the verification is passed, to obtain the session key.

3. The key distribution method according to claim 2, further comprising:
removing, by the first communication entity and the second communication entity, their respective temporary public-private key pairs after communication using the session key, and when secure communication is to be started next time, or when the session key is to be updated during secure communication, regenerating their respective temporary public-private key pairs, sending key request messages to the key distribution center via the carrier device, and repeating the steps above, to obtain a new session key.

4. The key distribution method according to any one of claims 1-3, wherein the key request message and the key response message further comprise a security parameter for negotiation and advertisement of an encryption algorithm, an operating mode, and an operating parameter.

5. The key distribution method according to any one of claims 1-3, wherein:
the key request message forwarded via the carrier device from the first communication entity further comprises information about the second communication entity; and
the key request message forwarded via the carrier device from the second communication entity further comprises information about the first communication entity.

6. A method for online updating a public key of a key distribution center based on claim 1 or claim 2, comprising:
searching, by the key distribution center, the database to obtain a list of communication entities that have registered a security service;
generating, by the key distribution center, a public-key update notification message, the public-key update notification message comprising a new public key of the key distribution center and a signature calculated using an old private key of the key distribution center; and
sending, by the key distribution center, the public-key update notification message to a communication entity that has registered the security service according to the list of communication entities that have registered the security service via a carrier device.

7. The method for online updating a public key of a key distribution center according to claim 6, further comprising:
verifying, by the communication entity, the signature in the public-key update notification message sent via the carrier device from the key distribution center using a locally-stored public key of the key distribution center upon reception of the public-key update notification message, and updating the locally-stored public key of the key distribution center with the new public key in the public-key update notification message if the verification is passed.

8. The method for online updating a public key of a key distribution center according to claim 7, further comprising:
sending, by the communication entity, a public-key update confirmation message to the key distribution center via the carrier device after finishing updating the locally-stored public key of the key distribution center; and
receiving, by the key distribution center, the public-key update confirmation message via the carrier device that is sent from the communication entity, the public-key update confirmation message comprising information on the communication entity having finished updating the public key of the key distribution center.

9. A key distribution center, wherein the key distribution center having a public-private key pair, and the key distribution center comprises:
a first reception unit, adapted to receive a key request message forwarded via a carrier device from the first communication entity, the key request message comprising a temporary public key of a first communication entity and information about a second communication entity that the first communication entity is to communicate with, and receive a second key request message forwarded via the carrier device from the second communication entity, the second key request message comprising a temporary public key of the second communication entity and information about the first communication entity that the second communication entity is to communicate with;
a querying unit, adapted to search a database for whether the first communication entity and the second communication entity both have registered a security service, and send a query result;
a first generation unit, adapted to generate a session key for communication between the first communication entity and the second communication entity upon reception of the query result sent by the querying unit that the first communication entity and the second communication entity both have registered the security service;
an encryption unit, adapted to encrypt the session key generated by the generation unit using the temporary public key of the first communication entity and calculate a signature using the private key of the key distribution center, to form a key response message, and, encrypt the session key for communication between the second communication entity and the first communication entity using the temporary public key of the second communication entity and calculate a signature using the private key of the key distribution center, to form a key response message; and
a first sending unit, adapted to return the key response message formed by the encryption unit using the temporary public key of the first communication entity to the first communication entity via the carrier device, and return the key response message formed using the temporary public key of the second communication entity to the second communication entity via the carrier device.

10. The key distribution center according to claim 9, further comprising:
an obtaining unit, adapted to search the database to obtain a list of communication entities that have registered the security service;
a second generation unit, adapted to generate a public-key update notification message, the public-key update notification message comprising a new public key of the key distribution center and a signature calculated using an old private key of the key distribution center; and
a second sending unit, adapted to send the public-key update notification message to a communication entity that has registered the security service via the carrier device according to the list obtained by the obtaining unit of communication entities that have registered the security service.

11. The key distribution center according to claim 10, further comprising:
a second reception unit, adapted to receive a public-key update confirmation message sent via the carrier device from the communication entity, the public-key update confirmation message comprising information on the communication entity having finished updating the public key of the key distribution center.

12. A communication entity, wherein the communication entity is adapted to obtain a public key of a key distribution center before secure communication, and the communication entity comprises:
a generation unit, adapted to generate a temporary public-private key pair;
a sending unit, adapted to send a key request message using the generated temporary public key to a key distribution center via a carrier device, the key request message comprising the temporary public key of the communication entity and information about a corresponding communication entity that the communication entity is to communicate with;
a reception unit, adapted to receive a key response message sent from the key distribution center, the key response message comprising a session key for communication between the communication entity and the corresponding communication entity that the communication entity is to communicate with; and
a verification unit, adapted to perform signature verification on the key response message using the public key of the key distribution center, and decrypt the key response message using the temporary private key of the communication entity if the verification is passed, to obtain the session key.

13. The communication entity according to claim 12, further comprising:
a key removal unit, adapted to remove the temporary public-private key pair after communication using the session key, and send to the generation unit a notification of regenerating a temporary public-private key pair when secure communication is to be started next time, or when the session key is to be updated during secure communication.

14. The communication entity according to claim 12, further comprising:
a key updating unit, adapted to verify a signature in a public-key update notification message sent via the carrier device from the key distribution center using a locally-stored public key of the key distribution center upon reception of the public-key update notification message, and, update the locally-stored public key of the key distribution center with a new public key in the public-key update notification message if the verification is passed.

15. The communication entity according to claim 14, further comprising:
a key update confirmation unit, adapted to send a public-key update confirmation message to the key distribution center via the carrier device after the key updating unit finishes updating the locally-stored public key of the key distribution center, the public-key update confirmation message comprising information on the communication entity having finished updated the public key of the key distribution center.

16. A key management system, comprising a communication entity, a carrier device, a key distribution center and a database, wherein:
the carrier device is adapted to transport a key request message, a key response message, a public-key update notification or a public-key update confirmation message during key distribution process and public-key update processes;
the database is adapted to store whether the communication entity has registered a security service and support the key distribution center; or, to return a list of communication entities that have registered the security service to the key distribution center;
the key distribution center is connected with the carrier device and the database, and is adapted to determine whether to generate a session key according to a result from searching the database upon reception of the key request message forwarded via the carrier device, encrypt and sign the generated session key to form a key response message, and send the key response message to the communication entity via the carrier device; or, to search the database to obtain the list of communication entities that have registered the security service, send the generated public-key update notification message to the communication entity via the carrier device, and receive the public-key update confirmation message via the carrier device that is sent from the communication entity; and
the communication entity is adapted to generate a temporary public-private key pair, send the key request message to the key distribution center via the carrier device, and perform signature verification on and decrypt the received key response message using a public key of the key distribution center and the temporary private key of the communication entity to obtain the session key; or, to update a stored public key upon reception of the public key update notification message via the carrier device that is sent from the key distribution center, and send the public-key update confirmation message to the key distribution center via the carrier device after finishing updating the stored public key.

17. The key management system according to claim 16, wherein the key management system comprises two or more of the communication entities.

18. The key management system according to claim 16 or 17, wherein the carrier device is: a short messaging system, a Global System for Mobile communications system, a Code Division Multiple Access system, a Public Switched Telephone Network, or the Internet.
